# EUROPÄISCHE PATENTANMELDUNG

(11) **EP 1 424 174 A1**
(43) Veröffentlichungstag der Anmeldung: **02.06.2004**
(21) Anmeldenummer: 03450267.4
(22) Anmeldetag: 28.11.2003
(51) Int. Cl.: B25J 15/08

(54) **Greifzangenanordnung für Roboteranlagen**

(30) Priorität: 29.11.2002 AT 17962002
(71) Anmelder: Ame- Allgemeine Maschinenentwicklungs- Ges.m.b.H & Co. KG, 8413 St. Georgen (AT)
(72) Erfinder: Kovac, Igor, 235 Radomlje (SI); Obendrauf, Hannes, 8413 St. Georgen (AT); Gödl, Michael, 8010 Graz (AT)
(74) Vertreter: Wildhack, Helmut, Dipl.-Ing. Dr.

(57) **Zusammenfassung**

Die Erfindung betrifft eine Greifzangenanordnung (1,1') für Roboteranlagen, zum Handhaben bzw. Heben schwerer Lasten, z.B. Betonbauteile, Steine od.dgl. mit zumindest einem Paar, vorzugsweise zwei kreuzweise angeordneten Paaren, an in Trägern (2) einander gegenüberstehend gelagerten, zwischen einer Greifstellung (G) und einer Lösestellung (L) verlagerbaren Greifbacken (3,3'). Erfindungsgemäß ist vorgesehen, dass jede Greifbacke (3,3') zu ihrer Verlagerung im Träger (2) über einen eigenen elektrischen Antriebsmotor (11), vorzugsweise Servomotor verfügt, dessen Drehmomentkennlinie so gewählt oder einstellbar ist, dass er im Stillstand bei Antriff der Greifbacke (3,3') gegen eine Last ein Soll-Drehmoment, gegebenenfalls sein Maximaldrehmoment, ausübt.

## Beschreibung

Die Erfindung betrifft eine Greifzangenanordnung vorzugsweise für Roboteranlagen, zum Handhaben bzw. Heben insbesondere schwerer Lasten, z.B. Betonbauteile, Steine, oder dgl., mit zumindest einem Paar, vorzugsweise zwei kreuzweise angeordneten Paaren, an in Trägern einander gegenüberstehend gelagerten, zwischen einer Greifstellung und einer Lösestellung verlagerbaren Greifbacken.

Solche Greifzangenanordnungen sind auf dem Gebiet der Handhabungs- und Hebetechnik wohlbekannt und dienen zum Zusammenschieben, Klammern, Hochheben, Drehen, Handhaben und Absetzen von handfesten Produkten. Bisherige Ausführungen weisen jedoch den Nachteil hohen Gewichts (typisch 300-500 kg) und sperriger Konstruktion auf. Die vorliegende Erfindung hat sich zum Ziel gesetzt, eine Greifzangenanordnung für Roboteranlagen bereitzustellen, die erhebliche Gewichtseinsparungen und schlankere Bauweise gegenüber den bekannten Systemen bietet, gleichzeitig aber dieselbe Leistungsfähigkeit wie die bekannten Greifzangenanordnungen aufweist. Der Begriff Roboteranlage ist dabei in einem breiten Sinn zu verstehen und umfasst alle steuerbaren Handhabungs-, Hebe- und Transportanlagen. Ein weiteres Ziel der Erfindung ist die Bereitstellung einer Greifzangenanordnung, die über hervorragende Manövrierbarkeit und Steuerbarkeit verfügt. Wieder ein anderes Ziel der Erfindung ist die Bereitstellung einer Greifzangenanordnung, deren Greifbacken schnell und vorzugsweise automatisch auswechselbar sind, womit eine Erhöhung der Flexibilität erreichbar wird.

Die erfindungsgemäße Aufgabe wird durch Fortbildung der eingangs erwähnten Greifzangenanordnung gemäß den kennzeichnenden Merkmalen des Anspruchs 1 gelöst. Vorteilhafte Weiterbildungen sind in den Unteransprüchen dargelegt.

Durch die erfindungsgemäße Maßnahme, jede Greifbacke zu ihrer Verlagerung im Träger mit einem eigenen elektrischen Antriebsmotor, vorzugsweise Servomotor, zu versehen, dessen Drehmomentkennlinie so gewählt oder einstellbar ist, dass er im Stillstand bei Greifstellung der Greifbacke ein Soll-Drehmoment, gegebenenfalls sein Maximaldrehmoment, ausübt, kann die Greifzangenanordnung wesentlich schlanker gebaut werden als bisherige Systeme. Der Antrieb der Greifbacken durch jeweils eigene Elektromotoren ermöglicht eine Konstruktion in Leichtbauweise, wie nachstehend noch detaillierter ausgeführt wird. Dadurch, dass anstelle von bekannten hydraulischen oder pneumatischen Antriebssystemen Elektromotoren zum Einsatz kommen, ergibt sich erstens eine beträchtliche Gewichtsersparnis, die auch eine schlankere Konstruktion der Träger erlaubt, zweitens der Wegfall des notwendigen Zwantsausgleich zwischen den beiden früher zu einem Greifpaar zusammenhängenden Greifbacken und drittens vermeidet man die sonst häufige Verschmutzung der zu hebenden Last durch auslaufendes Hydrauliköl oder Schmierstoffe. Der Verzicht auf Hydrauliköl und Schmierstoffe ergibt eine ausgesprochen umweltschonende Anordnung. Die erzielte Gewichtsersparnis führt wiederum dazu, dass gegenüber dem Stand der Technik schwerere Lasten angehoben bzw. gehandhabt werden können, ohne dass der Roboter dafür stärker dimensioniert werden müsste.

Indem jede Greifbacke über einen eigenen Elektromotor separat ansteuerbar ist, ergibt sich eine hervorragende Manövrierbarkeit und Steuerbarkeit der erfindungsgemäßen Greifzangenanordnung. Es ist damit nämlich nicht mehr nötig, die Greifzangenanordnung exakt zentral über der Last zu positionieren, um beim Verlagern der Greifbacken in ihre Greifstellung eine Versetzung der Träger zu vermeiden, die eine genaue Lastaufnahme unmöglich machen würde. Vielmehr kann, wenn sich der Träger asymmetrisch über der Last bzw. über einer Last mit asymmetrischer Form befindet, jede einzelne Greifbacke durch Berechnung mit einer, vorzugsweise frei programmierbaren, Steuereinheit so eingestellt werden, dass zunächst alle Greifbacken im selben Abstand von der Last knapp außerhalb der Greifstellung angeordnet werden und daraufhin eine synchrone Bewegung der Greifbacken in die Greifstellung stattfinden kann. Es ist auch möglich, bereits während der Bewegung eines Roboterauslegers, an dem sich die Greifzangenanordnung befindet, die Greifbacken in ihre vorhergesehenen Stellungen zum Greifen der Last zu bringen. Dadurch wird die tatsächlich zum Greifen benötigte Zeit gegenüber einer Vorgangsweise, bei der der Roboterausleger zunächst über der Last in Position gebracht und anschließend die Greifbacken von ihrer Lösestellung in die Greifstellung gebracht werden, minimiert. Die Taktrate eines solchen Roboters kann somit beträchtlich gesteigert werden, was mit hydraulischen oder pneumatischen Greifern nicht möglich ist..

Weiters sind als Elektromotoren erfindungsgemäß solche Typen vorgesehen, die dazu fähig sind, auch bei Rotorstillstand ein erwünschtes, vorprogrammierbares Drehmoment aufrecht zu erhalten und somit die Greifbacken bei Anliegen an der Last mit dem nötigen Anpressdruck gegen die Last zu pressen. Besonders geeignet sind Servomotoren, insbesondere Drehstromservomotoren. Schrittmotore bzw. Gleichstromservomotore sind nicht geeignet.

In einer bevorzugten Ausführungsform der Erfindung ist der Antriebsmotor mit der Greifbacke über ein Kraftübertragungssystem, vorzugsweise ausgewählt aus Seilen, Riemen, Zahnriemen, Ketten, Zahnstangen und entsprechenden Aufwickel- und Umlenkrollen, Zahnscheiben, Riemenscheiben, Zahnrädern, oder einem Kugelumlaufgetriebe, verbunden. Die genannten Maschinenelemente erlauben die Konstruktion eines leichtgewichtigen Antriebssystems, das sich problemlos in den Trägern unterbringen lässt und mit dem, beispielsweise durch Seilzüge mit Umlenkrollen, beliebige Kraftuntersetzungsverhältnisse realisierbar sind.

Vorteilhaft sind der Antriebsmotor und das Kraftübertragungssystem aller Greifbacken etwa in derselben Ebene angeordnet, was zu einer geringen Bauhöhe der Greifzangenanordnung und der Verringerung von Biegebeanspruchungen führt .

Für beste Steuerbarkeit der erfindungsgemäßen Greifzangenanordnung und schonende Behandlung der zu hebenden Lasten ist gesorgt, wenn Sensoren zur Messung von Weg und/oder Geschwindigkeit und/oder Anpressdruck der Greifbacken vorgesehen sind, wobei die Sensoren vorzugsweise als Messwandler in die Antriebseinheit integriert sind bzw. beim Antriebsmotor oder bei einem allenfalls vorhandenen Getriebe bzw. beim Kraftübertragungssystem angeordnet sein können. Beispielsweise kann der Absolutweg oder die Geschwindigkeit einer Greifbacke aus den Antriebsmotordrehungen ermittelt werden, insbesondere wenn es sich um einen Servomotor handelt. Der Anpressdruck wiederum kann aus der Stromaufnahme des Motors errechnet werden. Die Regelung des Anpressdrucks ist für verlässliches Hochheben bei gleichzeitig schonender Behandlung der Last wichtig. Die Messung des Absolutweges der Greifbacken ist beim Andocken der Greifbacken an die Last bzw. zum Ausschalten von Kräften auf die Träger beim Anlegen der Greifbacken an die Last von Bedeutung. Aus der Ermittlung der Geschwindigkeit der Greifbacken ist eine Optimierung der Taktzeiten der Anlage möglich.

Eine günstige Ausgestaltung der erfindungsgemäßen Greifzangenanordnung in Bezug auf ihre Baugröße ergibt sich, wenn das Antriebssystem der Greifbacken als Zug-Druck-System ausgebildet ist, indem die Greifbacken, beispielsweise durch Druck- oder Zugfedern, in die Lösestellung vorgespannt werden und der Antriebsmotor über das Kraftübertragungssystem die Greifbacken in ihre Greifstellung zieht.

Eine Variante der erfindungsgemäßen Greifzangenanordnung, die hohe Steifigkeit der Träger bei geringstem Gewicht bietet, ist dadurch gekennzeichnet, dass die Träger der Greifbacken aus U-Profilen, gegebenenfalls mit einwärtsgebogenen Schenkeln, gebildet sind, in denen die Greifbacken mit Kugelrollenlagern auf linearen Führungsbahnen geführt sind, wobei vorzugsweise die Führungsbahnen an einer Führungsschiene mit schwalbenschwanzförmigem Querschnitt ausgebildet sind. Die optimale Profilform kann beispielsweise nach der Methode der finiten Elemente errechnet werden. Die U-profilförmigen Träger können in den unteren Bereichen, in denen die Greifbacken nicht herausragen, aus Festigkeitsgründen geschlossen bzw. verbunden ausgebildet sein.

Aus Platzspargründen sollte der jeweilige Antriebsmotor am Träger nahe einer Mittelachse der Greifzangenanordnung gelegen sein.

Um die Greifzangenanordnung schnell und vorzugsweise automatisiert an die Erfordernisse unterschiedlicher zu hebender Lasten anpassen zu können, sind in einer Fortbildung der Erfindung die Greifbacken zweiteilig ausgebildet, mit einem im Träger gelagerten Verstellteil und einem Backenteil, wobei Verstellteil und Backenteil über eine Schnellwechseleinheit, vorzugsweise formschlüssig miteinander lösbar verbunden sind. Die Schnellwechseleinheit kann an einem aus Verstellteil und Backenteil seitlich vorragende Bolzen aufweisen, die mit Aufnahmen, Ausnehmungen oder Öffnungen am anderen aus Backenteil und Verstellteil in Eingriff bringbar sind. Bevorzugt sind die Bolzen bei Bewegung des Verstellteils in Richtung der Greifstellung in die Aufnahmen, Ausnehmungen oder Öffnungen in Eingriff bringbar und bei Bewegung des Verstellteils in die Lösestellung außer Eingriff bringbar. Die beiden Teile der Greifbacken werden ferner beim Verbinden mit Zentriereinheiten selbsttätig zentriert, um den Verstellteil und den Backenteil bezüglich ihrer Bewegungsebene exakt auszurichten.

Die Erfindung wird nun anhand von nicht einschränkenden Ausführungsbeispielen näher erläutert. In den Zeichnungen zeigen Fig. 1 schematisch einer Roboteranlage zum Heben und Transportieren von Lasten mit der erfindungsgemäßen Greifzangenanordnung, Fig. 2 eine vergrößerte und detaillierte Darstellung eines Greifbackenträgers mit der darin gelagerten Greifbacke und zugehörigem Antriebssystem, die Figuren 3 und 4 eine weitere Ausführungsform der Erfindung in der Perspektive bzw. in Seitenansicht, und Fig. 5 eine Führungsschiene mit Führungsflächen für Kugelrollen, die in der Erfindung bevorzugt zum Einsatz kommt.

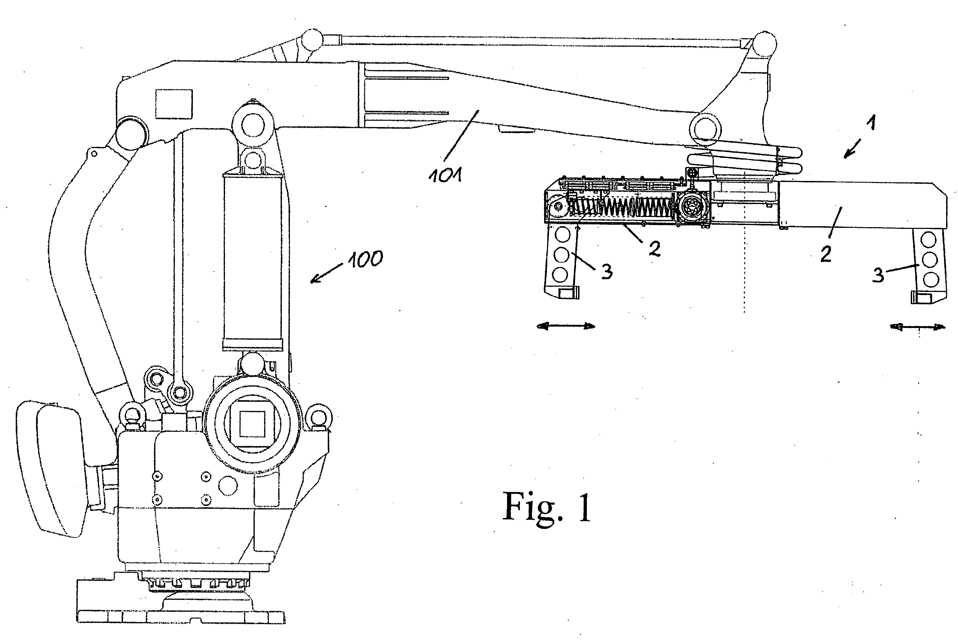

In Fig. 1 ist schematisch ein Gesamtbild einer Anlage zum Heben und Transportieren von Lasten dargestellt. Diese umfasst einen frei programmierbaren Roboter 100 mit einem Auslegerarm 101, an dem eine erfindungsgemäße Greifzangenanordnung 1 gelenkig befestigt ist. Die Greifzangenanordnung 1 umfasst zumindest zwei oder vier oder sechs Träger 2, an denen jeweils eine Greifbacke 3 zwischen einer inneren Greifstellung und einer äußeren Lösestellung hin und her bewegbar gelagert ist. Der Roboter 100 ist Fachleuten auf dem Gebiet bekannt und braucht daher nicht näher erläutert werden.

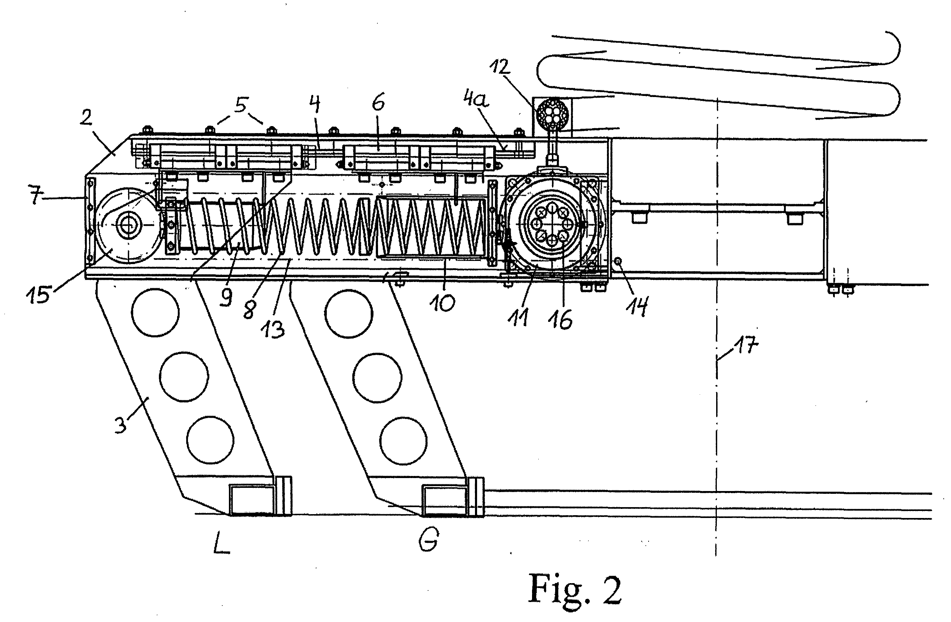

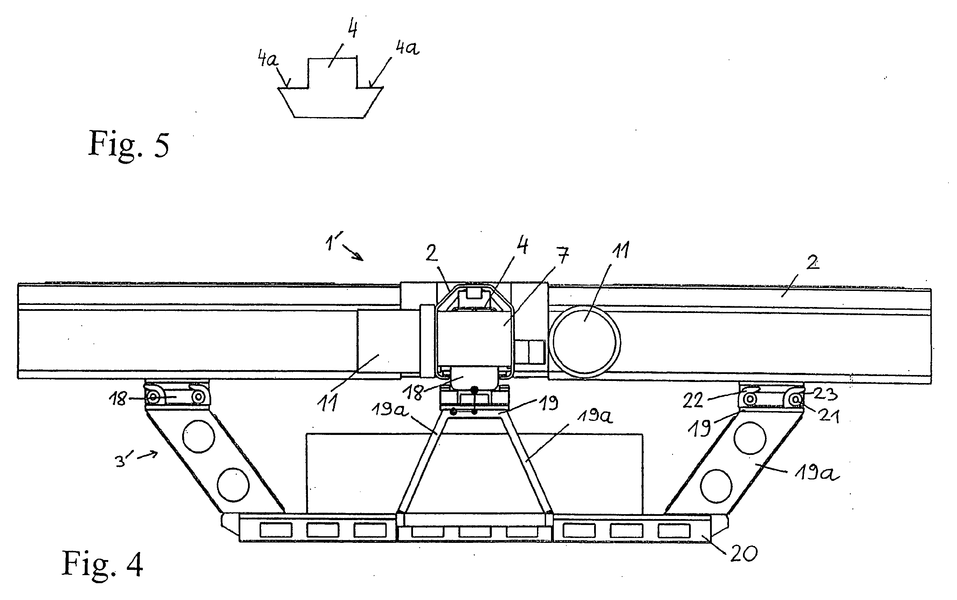

Eine vergrößerte Darstellung des linken Trägers 2 mit der darin gelagerten Greifbacke 3 von Fig. 1 ist in Fig. 2 zu sehen, aus der die Mechanik der Erfindung klar hervorgeht. Die Greifbacke 3 ist darin sowohl in ihrer äußeren Lösestellung L als auch in ihrer inneren Greifstellung G dargestellt. Der Träger 2 besteht aus einem nach unten offenen U-Profil, an dessen Basis-Innenseite eine Führungsschiene 4 mit Auflageflächen 4a für Kugelrollen mittels Schrauben 5 befestigt ist. Die Führungsschiene 4 bietet Führungsbahnen 4a, auf denen zumindest ein Schlitten 6 gleitet bzw. rollt, der zumindest einen Verstellteil 18 trägt.. Diese Führungsschiene 4 ist in Fig. 5 im Querschnitt dargestellt, man erkennt die beiden oben liegenden Führungsbahnen 4a. Nun wieder auf Fig. 2 Bezug nehmend, ist am Schlitten 6 die Greifbacke 3 befestigt, die nach unten aus der Öffnung zwischen den Schenkeln des U-förmigen Trägers 2 ragt. Eine Begrenzungsplatte 7 verhindert die Bewegung der Greifbacke 3 nach außen über ihre Lösestellung L hinaus. Die Greifbacke 3 wird durch eine stabförmige Druckfeder 8 in ihre Lösestellung L vorgespannt, wobei die Druckfeder 8 an einem Ende auf einen Fortsatz 9 aufgesteckt ist, der wiederum an der Greifbacke 3 befestigt ist, und mit ihrem anderen Ende in einer am Träger 2 befestigten Buchse 10 gelagert ist, wodurch eine seitliche Auslenkung der Druckfeder 8 verhindert wird. Um die Greifbacke 3 aus der Lösestellung L in die Greifstellung G zu bewegen, ist ein Antriebssystem mit Seilzug vorgesehen. Dieses umfasst einen Servomotor 11, der über einen Kabelbaum 12 mit Energie beaufschlagt und angesteuert wird. Ein Stahlseil 13 ist mit einem Ende am inneren Ende des Trägers 2 befestigt, verläuft längs durch den Träger bis zu einer an der Greifbacke 3 drehbar gelagerten Umlenkrolle 15, umschlingt die Umlenkrolle 15 in einem Winkel von 180° und läuft durch den Träger 2 zurück bis zu einer an der Welle bzw. am Motor des Servomotors 11 oder an dessen vorgelagertem Getriebe befestigten Aufwickelrolle 16, so dass durch Drehung des Rotors je nach Drehrichtung das Stahlseil 13 auf die Aufwickelrolle 16 aufgewickelt oder von ihr abgewickelt wird, wobei bei Aufwicklung das Stahlseil 13 die Greifbacke 3 entgegen der Rückstellkraft der Druckfeder 8 nach innen zieht. Bei Abwicklung des Stahlseils 13 von der Aufwickelrolle 16 wiederum drückt die Druckfeder 8 die Greifbacke 3 nach außen in die Lösestellung L. Der Servomotor 11 ist nahe dem inneren Ende des Trägers 2 befestigt, d.h. nahe der Mittelachse 17 der Greifzangenanordnung. Bei Anordnung des Servomotors am äußeren Ende des Trägers, ergibt sich eine Umkehrung des Abwickel- und Aufwickelrolle bei Änderung der örtlichen Position der Greifbacke. Das gesamte Antriebssystem liegt im Wesentlichen in einer Ebene bzw. in der Trägerebene. Der Servomotor 11 kann auch bei Rotorstillstand ein erwünschtes Drehmoment ausüben und dadurch die Greifbacke 3 in Greifstellung und mit dem nötigen freiprogrammierbaren Anpressdruck gegen eine zu hebende Last drücken. Er bietet weiters genaue absolute Wegmessung, Geschwindigkeitsmessung und Anpressdruckermittlung. Damit wird eine erweiterte programmierbare Achse ermöglicht. Dies wiederum ermöglicht jederzeit eine genaue Standortbestimmung der Greifbacke, eine exakte Einstellung des Anpressdrucks der Greifbacke gegen die Last, sowie kontinuierliche Überwachung der Bewegungsgeschwindigkeit der Greifbacke.

Die erfindungsgemäße Greifzangenanordnung kann vielerlei Lasten heben. Typische Einsatzgebiete sind das Heben und Stapeln von Beton-Hohlblöcken, Ziegelsteinen, Bordsteinen, Pflastersteinen u.s.w. Es ist auch möglich mehrere kleine Laststücke zu einem horizontalen Stapel zusammenzustellen und diesen durch entsprechenden Anpressdruck gegen die außen liegenden Laststücke des Stapels hochzuheben, ohne dass die innenliegenden Laststücke aus dem Stapel herausfallen. Mit anderen Worten, es muss keine Unterlage, wie z.B. eine Palette vorhanden sein, um eine Vielzahl solcher Laststücke auf einmal zu heben und zu rangieren. Ein typisches Einsatzgebiet für eine Roboteranlage mit der erfindungsgemäßen Greifzangenanordnung ist das Abnehmen von Betonformsteinen oder Ziegeln von einem Förderband, auf dem diese kontinuierlich oder intermittierend angeliefert werden.

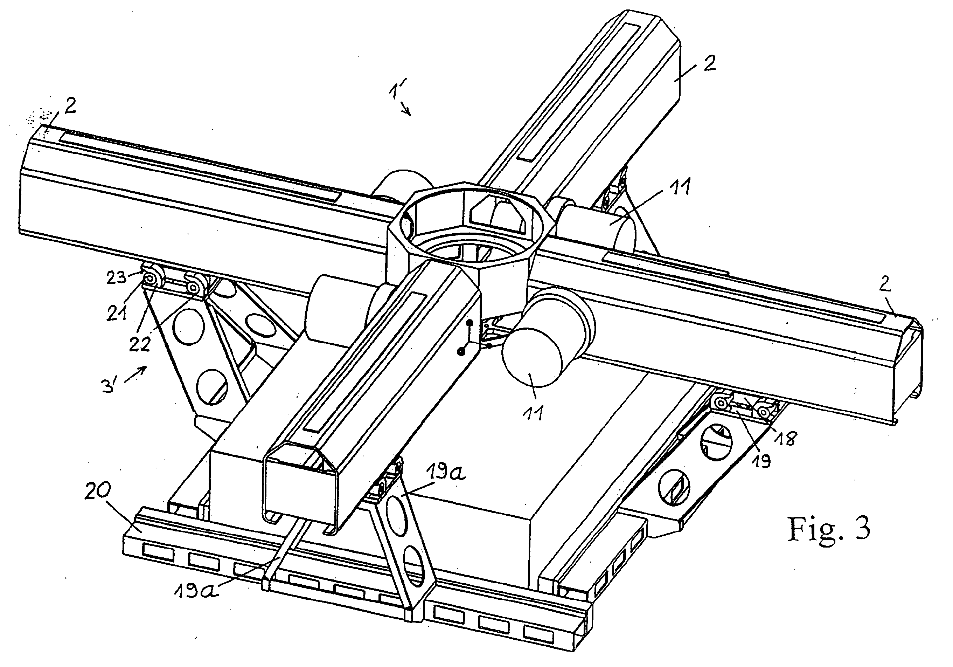

Eine weitere Ausführungsform einer erfindungsgemäßen Greifzangenanordnung 1' ist in Fig. 3 in der Perspektive und in Fig. 4 in Seitenansicht dargestellt. Die Greifzangenanordnung 1' umfasst vier im rechten Winkel zueinander angeordnete und zu einem Kreuz miteinander verbundene Träger 2, in denen Greifbacken 3' linear verschiebbar angeordnet sind. Die Antriebsmotoren 11 sind nahe dem Zentrum der Greifzangenanordnung 1' angeordnet, insbesondere um Massenträgheitsmomente zu verkleinern. Die Träger 2 sind dieselben wie in obiger Ausführungsform, die Greifbacken 3' unterscheiden sich jedoch insofern von der obigen Ausführungsform, als sie zweiteilig ausgeführt sind und aus einem im Träger 2 verfahrbar gelagerten Verstellteil 18 und einem Backenteil 19 mit gespreizten Tragarmen 19a bestehen, die einen balkenförmigen Greifteil 20 halten, wobei Verstellteil und Backenteil über eine Schnellwechseleinheit formschlüssig miteinander verbunden sind.

Die Schnellwechseleinheit ist realisiert, indem jeweils zwei Bolzen 21 links und rechts aus dem Verstellteil 18 vorragen. Diese Bolzen 21 sind in Aufnahmen 23 einführbar, die von Haken 22 gebildet werden, die am Backenteil 19 ausgebildet sind. Wesentlich ist, dass sich die von den Haken 22 gebildeten Aufnahmen 23 nach außen hin öffnen, so dass die Bolzen 21 bei Bewegung des Verstellteils 18 nach innen mit den Aufnahmen 23 in Eingriff gebracht werden und darin einrasten und bei Bewegung des Verstellteils 18 nach außen wieder außer Eingriff bringbar sind. Voraussetzung dafür ist, dass sich die Backenteile beim Schnellwechselvorgang in definierter Stellung am Boden oder auf einer Unterlage befinden. Alternativ dazu wäre es auch möglich, die Verbindung zwischen den Verstellteilen und den Backenteilen so zu gestalten, dass zumindest eine Horizontalbewegung und ein Anheben des Verstellteils zur Herstellung der Verbindung erforderlich ist.

Prinzipiell ist eine Vielzahl von Kraftübertragungssystemen möglich, um die Kraft des Servomotors auf die Greifbacken 3, 3' zu übertragen. Gewichtsmäßig vorteilhaft und einfach vom Aufbau her ist das in Fig. 2 dargestellte Kraftübertragungssystem. Dadurch, dass die Träger 2 und die Führungsbahnen 4a der einzelnen Träger 2 im wesentlichen auf gleicher Höhe angeordnet sind, können untereinander gleich ausgebildete Greifbacken 3, 3' eingesetzt werden.

Die Schnellwechseleinheit kann in verschiedenartiger Gestaltung ausgeführt werden. Beim Verstellteil 18 können Fortsätze bzw. Bolzen 21 oder Aufnahme bzw. Ausnehmungen oder Öffnungen ausgebildet sein, die mit entsprechenden Gegenstücken an dem Backenteil zusammenwirken bzw. von diesen aufgenommen werden können. Die Ausbildung wird dabei so gewählt, dass im Zuge einer Bewegung der Greifbacken 3, 3' in ihre Haltestellung die Verbindung zwischen dem Verstellteil 18 und dem Backenteil 19 hergestellt bzw. gehalten werden kann, wogegen bei einer Bewegung des Verstellteiles 18 in die Lösestellung L bei entsprechendem Festhalten der Backenteile 19, z.B. durch Aufliegen am Boden eine Lösung der Verbindung zwischen dem Verstellteil 18 und dem Backenteil 19 vorgenommen werden kann.

Die erfindungsgemäße Greifzangenanordnung kann auch zum Heben von relativ kleinen und leichten Lasten verwendet werden; vor allem ist die modulartige Aufbauweise derartiger Greifzangenanordnungen von Vorteil, die es ermöglichen, beschädigte oder nicht funktionierende Träger mit Kraftübertragungssystemen bzw. Motoren für sich auszutauschen bzw. auf Lager zu halten. Diese Träger werden an einem zentralen Lagerkörper 30 abnehmbar bzw. austauschbar befestigt. Die Form des Lagerkörpers 30 kann variieren; Befestigungsmöglichkeiten für die Träger 2 an dem zentralen Lagerkörper 30 sind in vielfältiger Weise denkbar. Es ist neben der Befestigung der Träger 2 am zentralen Lagerkörper 30 lediglich erforderlich, die Zuleitungen für die Stromversorgung der Antriebsmotoren 11 ab- bzw. anzuklemmen und allfällige Leitungen für Überwachungseinheiten entsprechend anzuschließen.

Die in der Zeichnung nicht dargestellten Überwachungseinrichtungen können die Bewegung der Verstellteile 18 überwachen bzw. die Bewegung der Antriebseinheiten für diese Verstellteile 18. Des weiteren können die Überwachungseinheiten die Funktion der Druckfeder 8 überwachen und bei einem allfälligen Federbruch Alarm geben.

Mit entsprechenden Überwachungseinrichtungen ist es prinzipiell auch möglich, ein fehlerhaftes Anlegen der Greifbacken 3,3' an Hindernisse zu erkennen. Ein derartiges fehlerhaftes Anlegen der Greifbacken 3,3' kann an Hindernisse erkannt werden durch eine entsprechende Programmierung der Bewegung der Greifzangenanordnung sowie der unabhängig davon erfolgenden Verstellung der Greifbacken 3,3'.

Mit den vorgesehenen Überwachungseinheiten ist es möglich, bei Feststellung von einem fehlerhaften Verhalten der Greifzangenanordnung oder bei einem mechanischen Defekt ein Alarmsignal abzugeben bzw. die Funktion der Greifzangenanordnung stillzusetzen.

Mit der erfindungsgemäßen Greifzangenanordnung ist das Heben, Seitwärtsversetzen bzw. es sind alle Handhabungstätigkeiten durchführbar. Im Hinblick auf die Leichtigkeit der erfindungsgemäßen Greifzangenanordnung können mit derselben Roboteranlage, an der die Greifzangenanordnung befestigt ist, schwerere Lasten gehoben werden; des weiteren sind diese Lasten exakter greifbar bzw. exakter positionierbar.

Von Vorteil ist es, dass bereits während einem großräumigen Verstellen der Greifzangenanordnung, z.B. bei der Rückstellung der Greifzangenanordnung von einem Ablageort zum Lastergreifungsort, die Greifbacken 3,3' in eine andere Stellung verfahren werden können, ohne dass dazu das Erreichen der Greifposition abgewartet werden muss. Damit wird die Wirtschaftlichkeit der Anordnung bzw. die Schnelligkeit der Durchführung von Handhabungstätigkeiten beträchtlich gesteigert. Die Schnelligkeit der Funktion der Greifzangenanordnung wird auch durch deren geringeres Gewicht aufgrund der Einfachheit ihres Aufbaus begünstigt.

## Patentansprüche

1. Greifzangenanordnung (1, 1'), vorzugsweise für Roboteranlagen, i zum Handhaben bzw. Heben insbesondere schwerer Lasten, z.B. Betonbauteile, Steine, oder dgl., mit zumindest einem Paar, vorzugsweise zwei kreuzweise angeordneten Paaren, an in Trägern (2) einander gegenüberstehend gelagerten, zwischen einer Greifstellung (G) und einer Lösestellung (L) verlagerbaren Greifbacken (3, 3'), **dadurch gekennzeichnet, dass** jede Greifbacke (3, 3') zu ihrer Verlagerung im Träger (2) über einen eigenen elektrischen Antriebsmotor (11), vorzugsweise Servomotor verfügt, dessen Drehmomentkennlinie so gewählt oder einstellbar ist, dass er im Stillstand bei Angriff der Greifbacke (3,3') gegen eine Last ein Soll-Drehmoment, gegebenenfalls sein Maximaldrehmoment, ausübt.

2. Greifzangenanordnung nach Anspruch 1, **dadurch gekennzeichnet, dass** der Antriebsmotor (11) mit der Greifbacke (3, 3') über ein Kraftübertragungssystem, vorzugsweise ausgewählt aus Seilen (13), Riemen, Zahnriemen, Ketten, Zahnstangen und entsprechenden Aufwickelrollen (16) und Umlenkrollen (15), Zahnscheiben, Riemenscheiben, Zahnrädern, oder einem Kugelumlaufgetriebe, verbunden ist, wobei gegebenenfalls der Antriebsmotor (11) und das Kraftübertragungssystem aller Greifbacken (3, 3') und/oder die Träger (2) etwa in derselben Ebene angeordnet sind.

3. Greifzangenanordnung nach einem der vorhergehenden Ansprüche, **dadurch gekennzeichnet, dass** Sensoren zur Messung von Weg und/oder Geschwindigkeit und/oder Anpressdruck der Greifbacken vorgesehen sind, wobei die Sensoren vorzugsweise als Messwandler in den Antriebsmotor (11) integriert sind, z.B. Ermittlung des Absolutwegs aus den Antriebsmotordrehungen.

4. Greifzangenanordnung nach einem der vorhergehenden Ansprüche, **dadurch gekennzeichnet, dass** die Greifbacken (3), vorzugsweise durch Druck- oder Zugfedern, in die Lösestellung (L) vorgespannt sind.

5. Greifzangenanordnung nach einem der vorhergehenden Ansprüche, **dadurch gekennzeichnet, dass** die Träger (2) der Greifbacken (3, 3') aus U-Profilen, gegebenenfalls mit einwärtsgebogenen Schenkeln bzw. Schenkelenden, gebildet sind, in denen die Greifbacken auf linearen, vorzugsweise im Basisbereich des U befindlichen bzw. befestigten, Führungsbahnen (4a) geführt sind, wobei vorzugsweise die Führungsbahnen (4a) an einer Führungsschiene (4) mit schwalbenschwanzförmigem Querschnitt ausgebildet sind.

6. Greifzangenanordnung nach einem der vorhergehenden Ansprüche, **dadurch gekennzeichnet, dass** der jeweilige Antriebsmotor (11) am Träger (2) nahe einer zentralen Achse bzw. Mittelachse (17) der Greifzangenanordnung (1, 1') bzw. dem Kreuzungspunkt der Träger (2) gelegen ist.

7. Greifzangenanordnung nach einem der vorhergehenden Ansprüche, **dadurch gekennzeichnet, dass** die Greifbacken (3') zweiteilig ausgebildet sind, mit einem im Träger (2) gelagerten Verstellteil (18) und einem Backenteil (19), wobei Verstellteil (18) und Backenteil (19) über eine Schnellwechseleinheit, vorzugsweise formschlüssig miteinander lösbar verbunden sind, wobei gegebenenfalls die Schnellwechseleinheit seitlich bzw. quer zur Bewegungsbahn der Greifbacken (3, 3') vorragende Fortsätze oder Bolzen (21) und an diese angepasste Aufnahmen (23), Ausnehmungen oder Öffnungen, in die die Bolzen bzw. Fortsätze (21) in Eingriff bringbar, insbesondere einrastbar sind, am Backenteil (19) und am Verstellteil (18) umfasst, und gegebenenfalls die Bolzen (21) bei Bewegung des Verstellteils (18) in Richtung der Greifstellung in die Aufnahmen (23), Ausnehmungen oder Öffnungen in Eingriff bringbar und bei Bewegung des Verstellteils (18) in Richtung der Lösestellung außer Eingriff bringbar sind.

8. Greifzangenanordnung nach einem der Ansprüche 3 bis 7, **dadurch gekennzeichnet, dass** an der Greifbacke (3, 3'), insbesondere deren Verstellteil (18) eine Umlenkrolle (15) gelagert ist, um die ein Seil (13) geführt ist, das nahe dem innenliegenden Ende des Trägers (2) an einer an der Welle des Betriebsmotors (11) oder an dessen vorgelagerten Getriebe montierten Aufwickelrolle befestigt ist, wobei gegebenenfalls der Verstellteil (18) mit einer Druck-oder Zugfeder (8) in Lösestellung (L) vorgespannt ist.

9. Greifzangenanordnung nach einem der Ansprüche 1 bis 8, **dadurch gekennzeichnet, dass** die einzelnen Träger (2) mit dem jeweiligen Kraftübertragungssystem und gegebenenfalls die jedem der Träger zugeordneten Antriebsmotoren (11) untereinander gleich aufgebaut und modulartig zur Greifzangenanordnung (1,1') zusammengebaut sind und/oder dass auf jedem Träger (2) eine Überwachungseinrichtung zur Feststellung der Funktionstüchtigkeit des Kraftübertragungssystems, insbesondere zur Feststellung eines Seilbruches oder Federbruches, angeordnet ist.

10. Greifzangenanordnung nach einem der Ansprüche 1 bis 9, **dadurch gekennzeichnet, dass** der Antriebsmotor ein Drehstrom-Servomotor ist.
